# FASCICULE DE BREVET EUROPEEN

(11) **EP 3 987 214 B1**
(45) Date de publication et mention de la délivrance du brevet: **07.06.2023**
(21) Numéro de dépôt: 20732228.0
(22) Date de dépôt: 16.06.2020
(51) Int. Cl.: F16L 55/105, G01M 3/02, F16K 3/18, F16K 37/00

(54) **ENSEMBLE POUR LA RÉALISATION D'UNE ÉPREUVE HYDRAULIQUE**
VORRICHTUNG ZUR DURCHFÜHRUNG EINES HYDRAULISCHEN PRÜFTESTS
APPARATUS FOR CONDUCTING A HYDRAULIC PROOF TEST

(30) Priorité: 21.06.2019 FR 1906744
(43) Date de publication de la demande: 27.04.2022
(73) Titulaire: Electricité de France, 75008 Paris (FR)
(72) Inventeur: FRENEAU, Coralie, 37550 SAINT-AVERTIN (FR); HOUSSAY, Fabien, 44115 HAUTE-GOULAINE (FR); BARANGER, Rudolph, 50260 BRICQUEBEC (FR); TABUTIN, Axel, 50470 LA GLACERIE (FR); SORIANO, Laurent, 50100 CHERBOURG (FR); OLLIVIER, Antoine, 50120 EQUEUDREVILLE-HAINEVILLE (FR)
(74) Mandataire: Regimbeau
(86) Numéro de dépôt international: PCT/EP2020/066574
(87) Numéro de publication internationale: WO 2020/254298

(56) Documents cités:
- CN-A- 106 090 273
- DE-A1- 1 450 290
- FR-A- 1 353 573

## Description

### DOMAINE DE L'INVENTION

La présente invention se situe dans le domaine la réalisation d'une épreuve hydraulique, c'est à dire d'un test de tenue à la pression, d'une installation hydraulique comprenant au moins un robinet à siège parallèles.

### ARRIERE PLAN TECHNOLOGIQUE DE L'INVENTION

De nombreuses installations industrielles comprennent des capacités (réservoirs, bâches, échangeurs, etc.) couplées à des canalisations (tuyauteries) pour le passage de fluides, liquides ou gazeux, souvent sous pression.

Pour garantir un fonctionnement fiable et sécurisé de ces installations, la maintenance de tels systèmes nécessite de réaliser régulièrement des tests de tenue à la pression et la réglementation des appareils à pression impose en outre de réaliser périodiquement des épreuves hydrauliques.

Dans la suite du texte, on entendra par *"tenue à la pression",* la capacité à résister aux efforts mécaniques que produit une telle mise sous pression qui peut engendrer la déformation des composants desdites installations industrielles, une perte d'intégrité des liaisons mécanique desdits composants et leur perte d'étanchéité.

Pour la réalisation de tests de tenue à la pression ou d'épreuves hydrauliques de réservoirs, bâches, ou tout autre type de capacité, il est nécessaire de modifier la configuration de l'installation pour créer une « bulle » de test ou d'épreuve, c'est-à-dire un circuit fermé permettant la mise sous pression de la capacité en vue de son évaluation technique.

Pour la création de ce circuit fermé, il est donc nécessaire de pouvoir obturer chacune des entrées/sorties de la bâche, notamment lorsqu'elles sont couplées à une canalisation, afin d'isoler le volume interne de la bâche.

Des points d'éventage, c'est à dire des évents, sont prévus pour permettre de chasser l'air présent dans les équipements et tuyauteries, et garantir la stabilisation de la pression lors de l'épreuve hydraulique.

Une pompe d'épreuve est utilisée pour gérer le remplissage et la montée en pression, la présence d'un manomètre permettant de garantir l'atteinte de la pression d'essai. Dans certains cas, il est par exemple réalisé des tests ou des épreuves avec de l'eau déminéralisée à température ambiante.

Pour créer la bulle d'épreuve hydraulique, il est possible de s'appuyer sur les assemblages boulonnés existants sur l'installation en utilisant des obturateurs adaptés pour l'isolation de la bâche ou de la canalisation. Toutefois, dans les industries utilisant des fluides dits dangereux (toxiques, inflammables, explosifs, etc.) ou des fluides chauds (par exemple vapeur), les capacités et tuyauteries sont dépourvues de brides qui auraient permis, après démontage, de poser des tapes (fonds pleins, brides pleines) boulonnées, permettant l'obturation.

Ainsi, il est généralement nécessaire de couper la canalisation et de souder un organe d'obturation au niveau de la section coupée de la canalisation.

Malheureusement, une telle technique d'obturation des canalisations présente un grand nombre d'inconvénients.

Tout d'abord, une telle solution implique une mise en oeuvre complexe, générant une intervention de longue durée, nécessitant des ressources humaines spécifiques rares (soudeurs, contrôleurs, etc.) et des besoins importants en logistique matérielle (ponts roulants, échafaudage, sas, système de décalorifugeage, etc.).

L'intervention comprend également des risques d'aléas importants de mise en oeuvre (défauts, malfaçon, etc.). De plus, l'intervention nécessite la fourniture de pièces de rechanges (dispositifs d'obturation soudés, éléments de tuyauteries pour la remise en conformité, etc.) coûteuses et dont les délais d'approvisionnement sont longs, compte-tenu de leurs caractéristiques techniques spécifiques. Les dispositifs d'obturation soudés ont une durée de vie limitée du fait des coupes réalisées, de sorte que cela nécessite de nouveaux approvisionnements réguliers.

Enfin, la mise en oeuvre de cette solution sur certaines installations, nécessite le plus souvent de réaliser des contrôles spécifiques, comme par exemple des contrôles non destructifs du type de ceux qui font usage de Rayons Gamma, contrôles complétés par ailleurs, le cas échéant, par l'établissement d'un dossier administratif défini par la réglementation en vigueur. Ces dits contrôles présentent, entre autres risques inhérents au soudage des risques radiologiques conduisant à la mise en place de balisages étendus et spécifiques, ce qui impose un arrêt des activités en cours au voisinage des tirs Gamma.

Une solution pour éviter ces inconvénients liés à l'utilisation d'obturateurs soudés, consiste à utiliser des dispositifs d'obturation mécaniques ou gonflables et à les positionner dans les canalisations pour les obturer. En fonction de la configuration, plusieurs types d'obturateurs peuvent être utilisés.

Ainsi, on connaît les obturateurs mécaniques décrits dans le document FR2989146. Ces obturateurs de grandes dimensions sont assemblés à l'intérieur des tuyauteries, ce qui permet leur mise en place malgré le fait que l'accès à la tuyauterie se fasse par des orifices de dimensions plus faibles que le diamètre de la canalisation. Ces obturateurs nécessitent un accès à proximité pour permettre l'instrumentation qui servira à la transmission des mesures aux fins de vérifier et contrôler leur étanchéité au cours de l'essai hydraulique.

On connaît aussi des obturateurs gonflables tels que ceux décrits dans FR2751006. Ces obturateurs nécessitent un accès à proximité pour permettre l'alimentation et garantir leur tenue dans la canalisation lors de l'essai hydraulique et éventuellement ajuster leur pression de gonflage. Leur application présente des limites techniques dues à la configuration des installations industrielles visées.

On a aussi affaire à des obturateurs mécaniques tels que ceux du document WO 00/03172. Ces obturateurs ont l'inconvénient de nécessiter de couper la canalisation qui doit être obturée avant d'être mis en place. Les inconvénients liés aux travaux de soudage sont réduits mais ne sont pas éliminés puisqu'ils restent présents à la remise en conformité des installations.

Qui plus est, ces obturateurs, mécaniques ou gonflables, qu'ils requièrent ou non la coupe de la tuyauterie, présentent l'inconvénient de nécessiter des longueurs droites de dimensions suffisantes afin d'être installés. De plus, les dites longueurs doivent être dépourvues de défauts de surface, accessibles et leur environnement doit permettre la manutention des obturateurs, ce qui n'est pas toujours le cas.

Lorsque l'installation le permet, il est possible de s'appuyer sur les organes de robinetterie associés à la bâche au niveau des entrées/sorties et dimensionnés pour résister à la mise sous pression pendant les tests ou épreuves hydrauliques. Cependant, une simple vérification du bon fonctionnement de chaque organe de robinetterie avant tests ou épreuves hydrauliques ne permet pas de garantir l'étanchéité parfaite nécessaire à ceux-ci d'autant que les robinets sont conçus avec un coefficient "d'inétanchéité" suivant les normes de conception telles que la NF E29-311-1, NF EN 12266-1 du 2012-05-01 (année-mois-jour) tolérant par exemple un débit de fuite de 10,5 mm³/s pour des robinets de DN (diamètre nominal) égal à 350 mm, de qualité requise pour lesdites installations.

Pour les robinets à sièges parallèles, une visite interne, c'est-à-dire la dépose des éléments internes (à savoir la tige et les opercules) pour permettre l'expertise qui consiste en un contrôle des portées opercules/sièges puis, si nécessaire, leur rodage, peut améliorer la situation mais ne garantit pas systématiquement l'étanchéité nécessaire à la validation des épreuves hydrauliques.

Un autre inconvénient est la durée de ces travaux qui nécessitent des compétences rares en robinetterie souvent priorisées sur d'autres activités. De plus, en cas d'aléa, l'intervention peut nécessiter l'approvisionnement de pièces de rechanges dont les délais d'approvisionnement sont importants. Encore un autre inconvénient est la multiplication des travaux sur des robinets ne faisant pas l'objet d'un programme de maintenance préventive.

Lorsqu'il est concluant, la réalisation d'un test inter-opercules (en abrégé TIO) du robinet en amont de l'épreuve hydraulique permet de garantir l'étanchéité aux conditions de l'essai.

Pour ce test, l'espace inter opercules et l'espace supérieur du robinet sont mis en eau et montés en pression avant l'épreuve afin de vérifier l'étanchéité amont/aval des opercules sur les sièges.

Lorsque ce test n'est pas concluant, un outillage peut être installé en lieu et place des opercules permettant de garantir l'étanchéité du robinet. Le chapeau, la tige et les opercules du robinet sont alors démontés pour permettre la mise en place d'un outillage d'obturation adapté.

Il existe peu d'outillages sur le marché répondant à ce besoin.

Une solution utilisée dans l'industrie est la mise en place d'obturateurs à plaques parallèles avec une ou plusieurs vis dont la position est réglable grâce à un système d'écrou/contre-écrou.

Malheureusement, cette solution présente un grand nombre d'inconvénients.

Tout d'abord, la manipulation de l'outillage est difficile et dangereuse. L'outillage est lourd et l'introduction des mains dans le corps du robinet est nécessaire, le réglage étant manuel.

Ensuite, les obturateurs existants sont spécifiques à une technologie et une dimension de robinets, ce qui nécessite de reprendre la conception et les notes de calcul pour chaque nouveau robinet rencontré, sachant qu'il n'existe pas d'outillages adaptés aux robinets dont les distances entre sièges sont faibles.

De plus, les obturateurs existants ne permettent pas de chasser l'air contenu dans les parties hautes des équipements et capacités.

De ce fait, ces outillages sont très peu répandus et dans la majorité des cas, en cas de test inter opercules défaillant, la mise en place d'un dispositif d'obturation soudé en amont des robinets est privilégiée pour sécuriser les épreuves hydrauliques. Et l'on retombe sur les inconvénients de ces dispositifs soudés cités précédemment.

Parmi les différentes structures de vannes à sièges parallèles existantes, certaines pourraient répondre à une partie de la problématique rencontrée.

Ainsi, on connaît des structures de vannes à sièges parallèles dont un premier plateau est plein, tandis que le second plateau est ajouré. Un ressort vient plaquer les deux plateaux contre les sièges de la canalisation. On peut se reporter à ce sujet aux documents CN205908770, CN106090273 et CN202691105 par exemple.

Dans l'ensemble des dispositifs décrits dans ces documents, l'obturation se fait par un dispositif résident actionné par une tige, la tige ne pouvant pas être déconnectée.

Le dispositif est positionné dans une vanne donnée et ne peut pas être déplacé dans une autre de dimensions et de design différent. Il n'est pas réglable en diamètre et en encombrement.

Le dispositif ne fonctionne que dans un sens dans le corps de la vanne (présence d'une seule portée), de sorte qu'il ne permet pas de réaliser l'étanchéité dans le cas d'une EH (épreuve hydraulique) avec une pression appliquée dans le sens opposé, en fonctionnement.

FR1353573 décrit un ensemble pour la réalisation d'une épreuve hydraulique, qui comprend un obturateur à plaques parallèles et un dispositif d'insertion et de support de cet obturateur à l'intérieur du robinet.

DE1450290 se rapporte à un élément de fermeture de tuyau pour test à pression comprenant un obturateur à plaques parallèles.

CN106090273 décrit une structure de vanne à sièges parallèles.

La présente invention a pour but d'apporter une solution aux problèmes exposés plus haut.

En d'autres termes, elle vise à proposer un ensemble d'éléments qui puisse permettre la réalisation d'une épreuve hydraulique, c'est à dire d'un test de tenue à la pression, d'une installation hydraulique comprenant au moins un robinet à siège parallèles, pouvant être introduit, être enlevé et mis en place à la demande, de conception simple et dont la mise en oeuvre est facile, y compris par des primo-intervenants.

### RESUME DE L'INVENTION

Ainsi, la présente invention se rapporte essentiellement à un ensemble pour la réalisation d'une épreuve hydraulique, c'est à dire d'un test de tenue à la pression, d'une installation hydraulique comprenant au moins un robinet à siège parallèles, le corps de ce robinet ayant été préalablement débarrassé de sa tige d'actionnement, de ses opercules parallèles et du chapeau de support de ladite tige d'actionnement, libérant ainsi une ouverture d'accès auxdits sièges parallèles, caractérisé par le fait qu'il comprend :
- un obturateur à plaques parallèles, l'une étant ajourée et l'autre étant pleine, ces plaques étant reliées par des moyens de liaison permettant de régler leur écartement mutuel, de façon à pouvoir les faire passer d'une première position dite "rétractée" dans laquelle cet écartement est suffisant pour permettre l'introduction de l'obturateur à l'intérieur dudit robinet via ladite ouverture, à une deuxième position, dite expansée, dans laquelle ledit écartement est supérieur à celui des plaques dans ladite première position, cet écartement permettant de les appliquer fermement contre lesdits sièges parallèles ;
- un dispositif d'insertion et de support dudit obturateur à l'intérieur dudit robinet qui comprend au moins un outil dit "outil intérieur" qui a la forme générale d'un "U" et est configuré pour être introduit à l'intérieur dudit robinet, les ailes parallèles de cet outil en "U" formant des guides pour l'introduction et le retrait dudit obturateur, tandis que sa base forme un support de retenue dudit obturateur en vue de l'application de ses plaques parallèles contre lesdits sièges parallèles ;
- une "fausse tige", c'est à dire un équipement d'étanchéité configuré pour fermer de manière étanche ledit robinet après remise en place dudit chapeau de support.

Selon d'autres caractéristiques non limitatives et avantageuses de l'invention, prises seules ou selon une combinaison quelconque d'au moins deux d'entre elles :
- lesdites plaques parallèles sont démontables et interchangeables ;
- lesdits moyens de liaison reliant lesdites plaques de l'obturateur comprennent d'une part au moins un ressort configuré pour amener lesdites plaques dans ladite deuxième position, et d'autre part au moins un vérin pilotable à la demande, pour contraindre lesdites plaques à occuper ladite première position à l'encontre de l'action dudit ressort ;
- lesdits moyens de liaison reliant lesdites plaques de l'obturateur comprennent d'une part au moins un ressort configuré pour amener lesdites plaques dans ladite première position et d'autre part au moins un vérin pilotable à la demande, pour contraindre lesdites plaques à occuper ladite deuxième position à l'encontre de l'action dudit ressort ;
- lesdits moyens de liaison reliant lesdites plaques de l'obturateur comprennent un ensemble de biellettes articulées d'une part sur une première plaque et d'autre part sur une seconde plaque ;
- chacune desdites biellettes est articulée sur l'une des dites plaques via une liaison à pivot glissant ;
- ledit dispositif d'insertion et de support comprend également un outil dit "outil extérieur", configuré pour être positionné sur le plan de joint dudit chapeau, autour de ladite ouverture et permettre le centrage dudit "outil intérieur" ;
- ledit dispositif d'insertion et de support comprend également une paire de rallonges extérieures de guidage, configurées pour être positionnées sur ledit "outil extérieur", dans le prolongement des ailes dudit "outil intérieur" ;
- ladite "fausse tige" est du type presse étoupe ou autoclave ;
- ladite "fausse tige" est pourvue d'une ligne d'évent ;
- ladite "fausse tige" est pourvue de moyens d'instrumentation.

### BREVE DESCRIPTION DES DESSINS

D'autres caractéristiques et avantages de l'invention apparaîtront à la lecture de la description détaillée qui va suivre. Elle sera faite en référence aux dessins annexés dans lesquels :
La figure 1 est une vue schématique, selon un plan de coupe vertical, d'une structure connue de robinet à sièges parallèles, sur laquelle on se propose de réaliser une limite d'épreuve hydraulique (test de tenue à la pression) ;
La figure 2 est une vue schématique, de face, d'un obturateur à plaques parallèles qui fait partie de l'ensemble selon la présente invention ;
La figure 3 est une vue de l'obturateur de la figure précédente, dans une première position ;
La figure 4 est une vue de l'obturateur de la figure 2, dans une autre position ;
La figure 5 est une vue de face d'une variante de l'obturateur à plaques parallèles précédemment illustré ;
La figure 6 est une vue schématique, de face, de l'obturateur de la figure 5 ;
La figure 7 est une vue de l'obturateur de la figure précédente, dans une première position ;
La figure 8 est une vue de l'obturateur de la figure 6, dans une autre position ;
La figure 9 est un premier schéma destiné à expliquer comment on procède à la mise en place de l'obturateur des figures 2 à 4 à l'intérieur de la structure de robinet à tester ;
La figure 10 est un second schéma destiné à expliquer comment on procède à la mise en place de l'obturateur des figures 2 à 4 à l'intérieur de la structure de robinet à tester
La figure 11 est un premier schéma destiné à expliquer comment on procède à la mise en place de l'obturateur des figures 5 à 8 à l'intérieur de la structure de robinet à tester ;
La figure 12 est un second schéma destiné à expliquer comment on procède à la mise en place de l'obturateur des figures 5 à 8 à l'intérieur de la structure de robinet à tester ;
La figure 13 est une première vue montrant en perspective, un dispositif d'insertion et de support de l'obturateur à plaques parallèles qui fait partie de l'ensemble selon la présente invention ;
La figure 14 est une deuxième vue montrant le dispositif de la figure précédente, ledit obturateur étant dans sa position initiale en figures 3 et 7, avant descente à l'intérieur de la structure de robinet ;
La figure 15 est une troisième vue montrant le dispositif de la figure 13, ledit obturateur étant dans sa position finale ;
La figure 16 est une vue schématique d'une première forme de réalisation d'une "fausse tige" qui fait partie de l'ensemble selon la présente invention ;
La figure 17 est une vue schématique d'une deuxième forme de réalisation d'une "fausse tige" qui fait partie de l'ensemble selon la présente invention ;
La figure 18 est une vue schématique montrant la structure de robinet de la figure 1 en cours d'épreuve hydraulique au moyen d'une première variante de l'ensemble selon la présente invention ;
La figure 19 est une vue montrant la structure de robinet de la figure 1 en cours d'épreuve hydraulique au moyen d'une deuxième variante de l'ensemble selon la présente invention.

### DESCRIPTION DETAILLEE DE L'INVENTION

Un but de la présente invention est de proposer un dispositif d'obturation de robinets à sièges parallèles permettant de résoudre au moins l'un des inconvénients cité en introduction de la présente demande.

En particulier, un but de la présente invention est de proposer un dispositif d'obturation adapté à toutes les dimensions et tous les constructeurs de robinets à sièges parallèle, permettant ainsi de répondre à l'ensemble de la plage de besoins pour les épreuves hydrauliques des équipements et capacités de centrales nucléaires notamment.

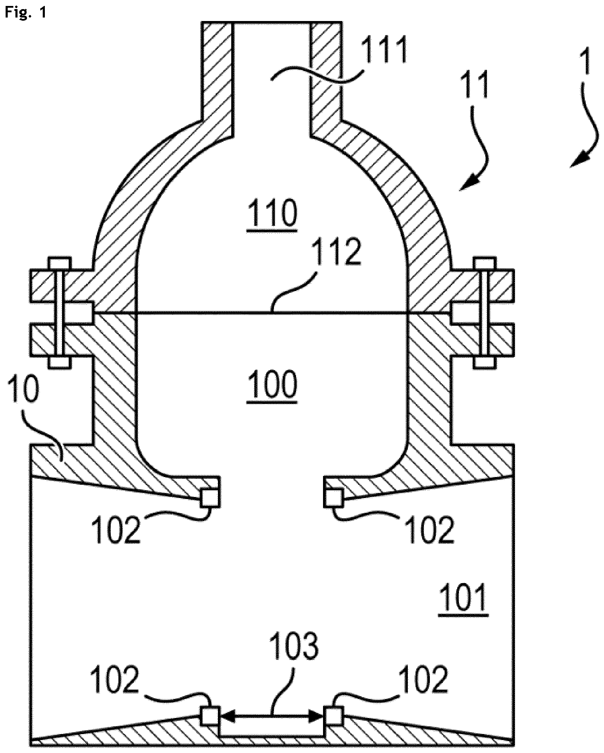

Avant de rentrer dans le détail de ce qui compose l'ensemble selon la présente invention, on se reportera à la figure 1 annexée sur laquelle est représentée une structure connue de robinet 1 à sièges parallèles, sur laquelle on se propose de procéder à une épreuve hydraulique (test de tenue à la pression).

Ce robinet 1 comporte un corps 10 surmonté d'un chapeau 11, lequel présente une ouverture supérieure 111. Ce chapeau 11 définit un espace intérieur 110. On a référencé 112 le plan de joint de ce dernier.

Le corps 10 définit un espace supérieur 100 d'orientation verticale qui se situe exactement dans le prolongement de l'espace 110 précité. L'espace 100 communique par sa partie basse avec un espace inférieur d'orientation horizontale 101 qui est le lieu de passage du fluide à travers le robinet 1.

On a référencé 102 les deux sièges parallèles contre lesquels viennent s'appuyer, en temps normal, les opercules de ce robinet. Enfin, la référence 103 désigne la distance entre les deux sièges 102.

Ainsi que cela a été précédemment décrit, l'ensemble selon la présente invention comporte un obturateur à plaque parallèles.

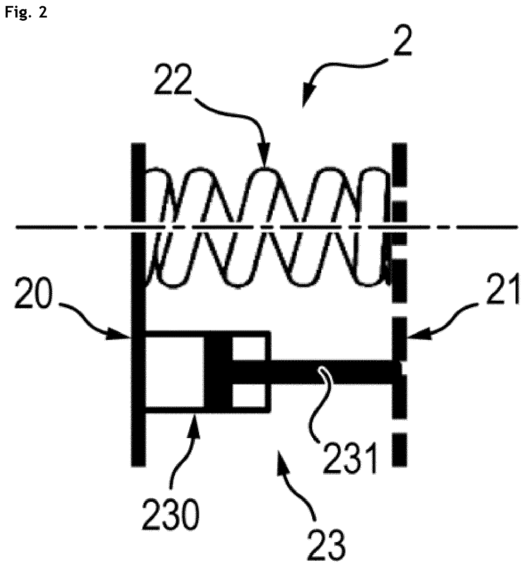

Un premier mode de réalisation de celui-ci est présenté aux figures 2 à 4.

Cet obturateur 2 comporte deux plaques parallèles 20 et 21 de forme identique, l'une 20 étant pleine, tandis que la seconde 21 est ajourée. Ces plaques, en forme générale de disques, présentent sur leur face externe (c'est à dire celle qui est tournée en direction opposée de l'autre plaque) un joint périphérique non représenté. Préférentiellement, ces plaques sont prévues démontables et interchangeables.

Ces plaques sont reliées par des moyens de liaison permettant de régler leur écartement mutuel.

En l'occurrence, on a affaire ici à au moins un ressort hélicoïdal 22 ainsi qu'à un vérin 23, lesquels sont disposés l'un à côté de l'autre, c'est à dire en parallèle.

Les deux extrémités opposées du ressort 22 sont fixées sur les faces en regard des plaques 20 et 21. Le corps 230 du vérin est fixé à la plaque 20, tandis que l'extrémité libre de sa tige 231 est fixée à la plaque 21. Bien entendu, un montage inversé peut être envisagé.

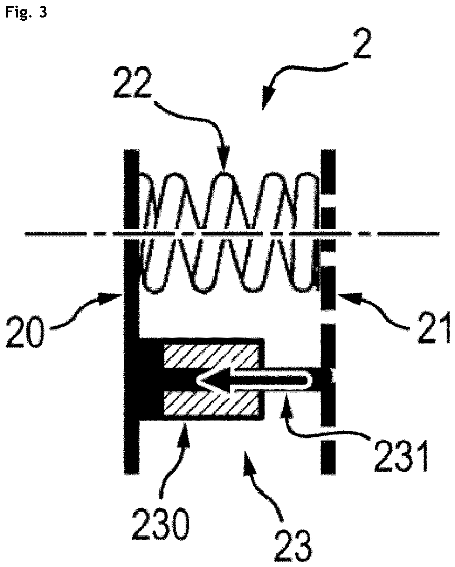

Dans ce mode de réalisation, on envisage que le ressort 22 tend naturellement à s'expanser, de manière à augmenter l'écartement mutuel entre les plaques 20 et 21. Dans ces conditions et comme montré à la figure 3, il faut piloter le vérin 23, de manière à commander la rétraction de sa tige 231, à l'encontre du ressort 22 pour régler au minimum l'espace entre les plaques 20 et 21.

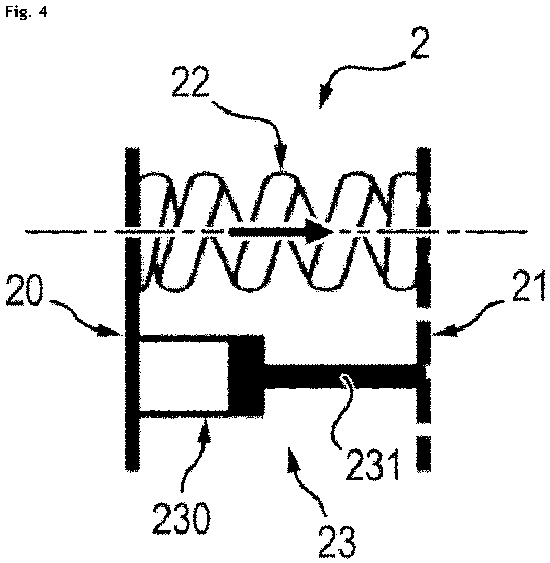

Le vérin 23 est préférentiellement alimenté à l'air mais peut également être alimenté à l'eau en cas d'indisponibilité du réseau d'air. A la Figure 3, l'obturateur 2 est représenté en position rétractée, l'air comprimé étant présent dans la cage du vérin, alors qu'à la figure 4 l'obturateur est en position expansée, et l'arrivée d'air est déconnectée.

A contrario, dans une variante non illustrée ici, le ressort peut être prévu pour contraindre les deux plaques à se rapprocher l'une de l'autre, le vérin étant alors piloté à la demande pour contraindre les plaques à s'écarter l'une de l'autre.

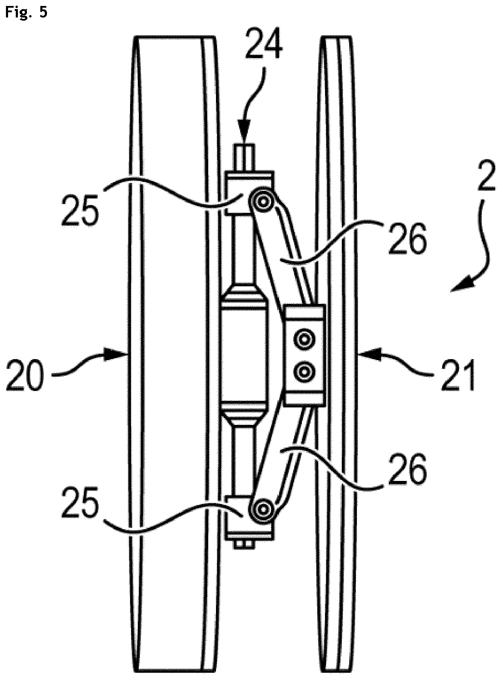

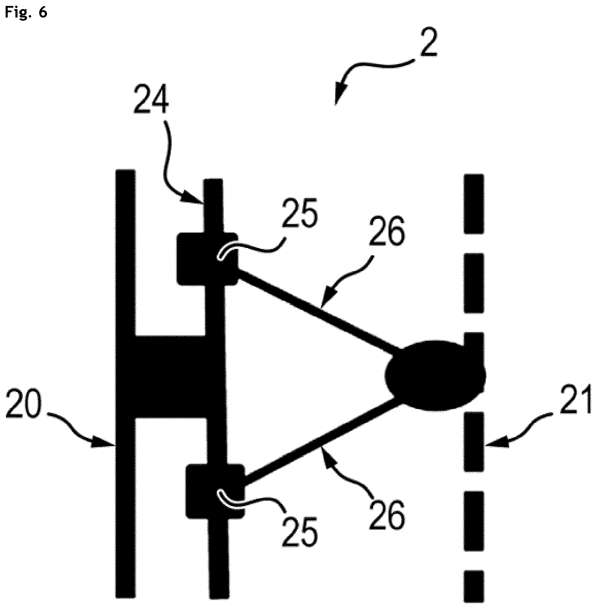

Un second mode de réalisation de de l'obturateur 2 est présenté aux figures 5 à 8.

Sur ces figures, les pièces portant les mêmes références que celles des figures 2 à 4 sont identiques.

Les moyens qui permettent de moduler l'écartement entre les plaques 20 et 21 sont ici exclusivement mécaniques.

Ainsi, la plaque pleine 20 est couplée à une vis hélicoïdale 24 sur laquelle sont agencés deux pivots glissants 25. Par ailleurs, sur chacun de ces pivots 25 est articulée une biellette 26. Les extrémités opposées de ces biellettes sont pratiquement jointives et sont articulées quant à elle sur la plaque 21.

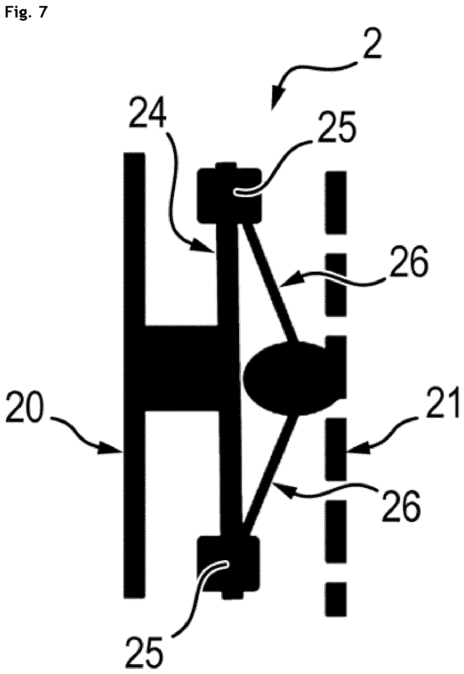

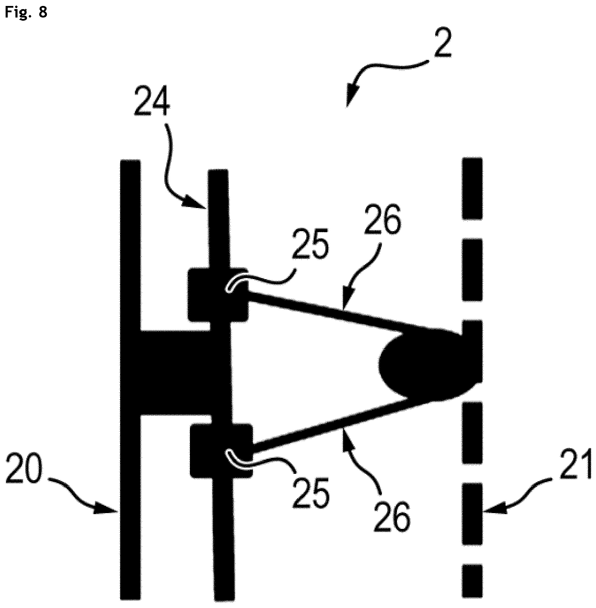

Dans ces conditions et comme le montrent particulièrement les figures 7 et 8, en actionnant la vis hélicoïdale 24 dans un sens ou un autre, on va pouvoir régler l'écartement entre les plaques 20 et 21.

Quel que soit le mode de réalisation que l'on considère, l'obturateur 2 va pouvoir adopter une position "rétractée" dans laquelle l'écartement entre les plaques 20 et 21 est minimal et est mis à profit pour permettre son introduction dans une structure de robinet à obturer.

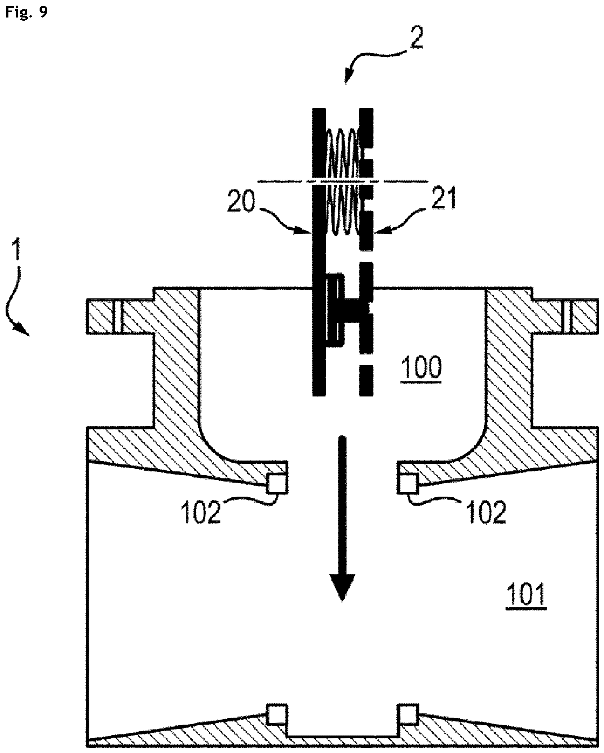

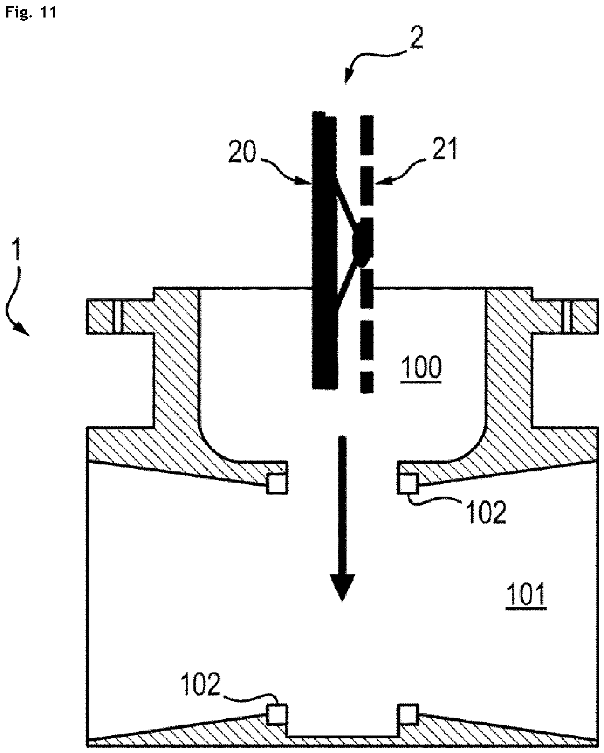

C'est ce qui est représenté aux figures 9 et 11 annexées, lesquelles montrent qu'après avoir débarrassé le robinet 1 de son chapeau 11, il est possible d'y introduire par l'espace 100, ledit obturateur 2, puis de le déplacer selon un mouvement descendant d'orientation verticale, en regard des sièges 102.

On s'arrangera pour que leur dimensionnement permette une mise en place dans des corps de robinets dont les espaces inter opercules sont restreints.

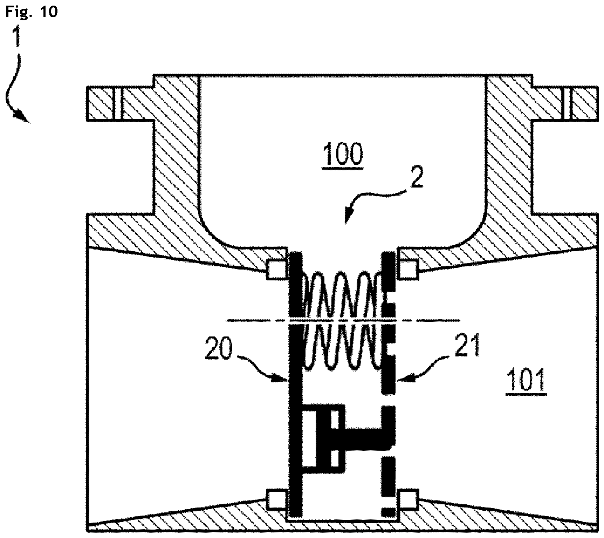

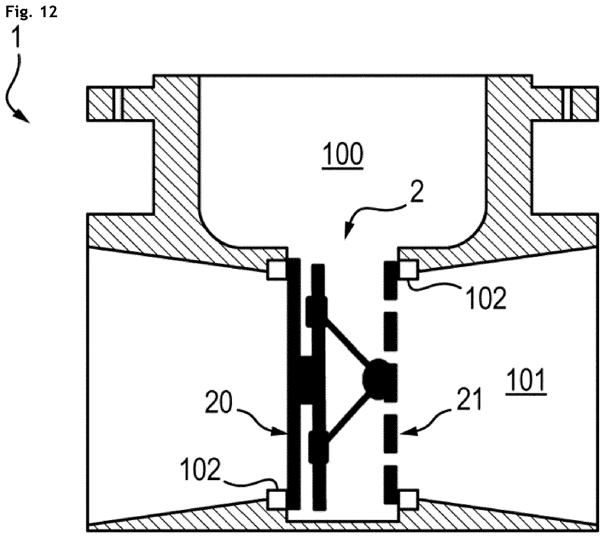

Une fois en position, l'obturateur 2 peut être piloté pour que la distance entre les plaques 20 et 21 augmente, jusqu'à ce que les plaques 20 et 21 viennent s'appuyer sur les sièges 102 du robinet 1, jusqu'à l'obtention de l'étanchéité parfaite nécessaire à l'épreuve hydraulique (voir figures 10 et 12). Une fois en position, l'étanchéité est garantie sans nécessiter de contrôle ou réglage en service.

Bien entendu, les joints qui équipent les plaques 20 et 21 permettent de protéger les sièges 102 du robinet 1, le joint de la plaque pleine 20 étant conçu afin d'épouser le siège correspondant, garantissant ainsi l'étanchéité en toute circonstance. Ce joint permet d'absorber d'éventuelles inégalités de surface.

Comme précisé plus haut dans la présente description, l'ensemble selon la présente invention comporte par ailleurs un dispositif d'insertion et de support dudit obturateur 2 à l'intérieur du robinet 1.

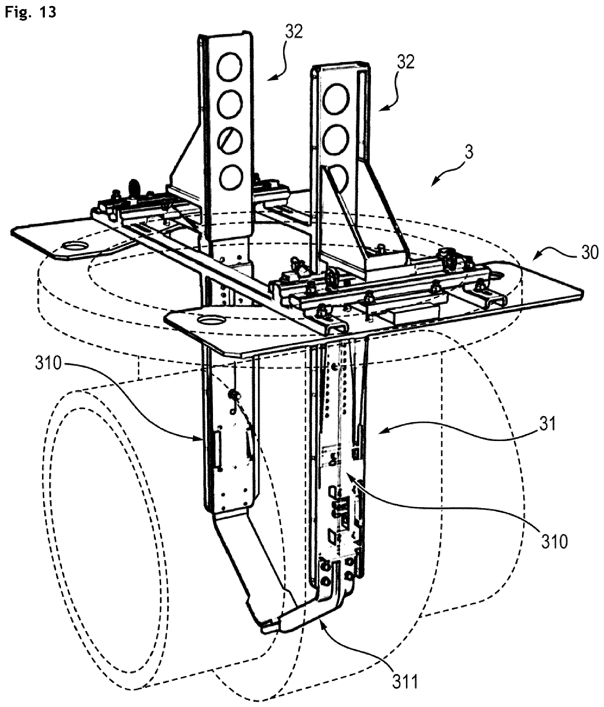

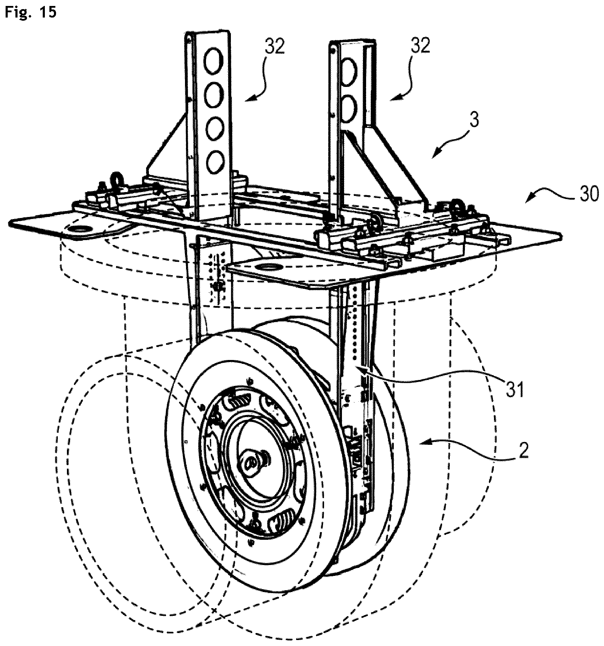

On se reportera plus spécifiquement aux figures 13 à 15 pour décrire un mode de réalisation possible de ce dispositif 3.

Dans le mode de réalisation présenté ici, le dispositif 3 comporte un "outil extérieur " 30 destiné à venir s'appuyer sur le plan de joint 112 du chapeau 11 du robinet 1, en laissant accessible l'intégralité de l'accès à l'espace 100. Cet outil, que l'on peut qualifier de plateforme, a pour vocation d'être démonté avant fermeture du robinet (repose du chapeau 11) pour réalisation de l'épreuve hydraulique.

Le dispositif d'insertion 3 comprend également, comme indiqué plus haut, un "outil intérieur" 31.

Ainsi que cela est bien visible sur les figure annexées, cet outil 31 a la forme générale d'un "U" et est configuré pour être introduit à l'intérieur du robinet 1, les ailes parallèles 310 de cet outil en "U" formant des guides pour l'introduction et le retrait de l'obturateur 2, tandis que sa base 311 forme un support de retenue dudit obturateur 2 en vue de l'application de ses plaques parallèles 20 et 21 contre les sièges parallèles102 du robinet. Bien que cela ne soit pas visible sur les figures, au moins une cale est positionnée entre l'obturateur et l'outil 31 pour réaliser le centrage de l'obturateur.

Bien entendu, l'outil 31 comporte des moyens de fixation qui permettent de le rendre solidaire de l'outil extérieur 30.

Enfin, le dispositif 3 comporte une paire de rallonges extérieures de guidage 32, configurées pour être positionnées sur l' "outil extérieur" 30, dans le prolongement des ailes 310 de l' "outil intérieur" 31.

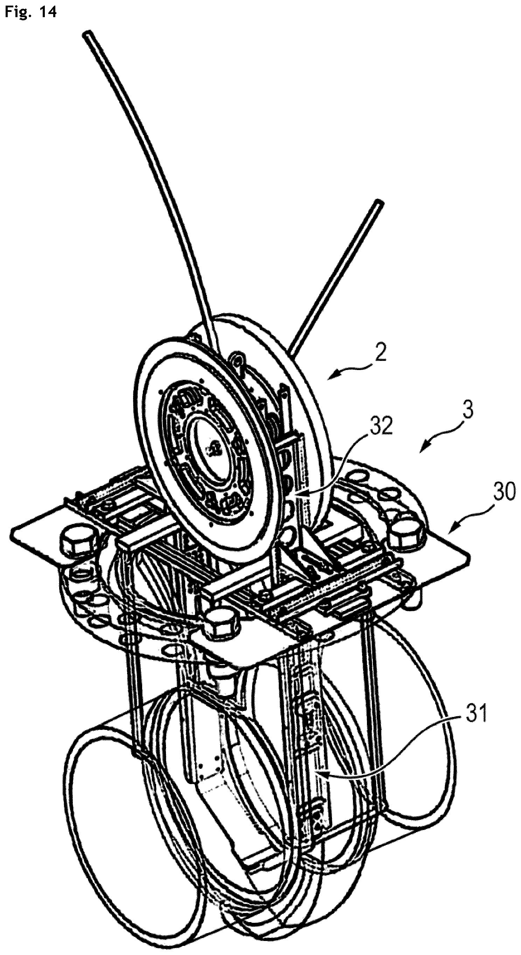

Pour la mise en place de l'obturateur 2 dans le robinet 1, cet obturateur est positionné entre les rallonges 32 (voir figure 14) et descendu progressivement jusqu'à la base de l'outil intérieur 31, ce qui permet de faire glisser l'obturateur jusqu'à sa position finale. Une fois en place, l'obturateur 2 est expansé pour obtenir l'étanchéité. Un système de verrouillage automatique permet de rendre solidaire l'obturateur 2 et l'outillage intérieur 31. L'outillage intérieur 31 reste en place dans le robinet pendant l'épreuve hydraulique, l'outil extérieur 30 et les rallonges extérieures 32 étant démontées. Il sera extrait conjointement avec l'obturateur 2 lorsque l'épreuve hydraulique sera terminée. Il est prévu pour ne pas présenter de gêne pour la réalisation de l'épreuve hydraulique.

Une fois que l'obturateur est en place, il est nécessaire de repositionner le chapeau 11 du robinet 1, et de prévoir une "fausse tige pour remplacer la tige d'origine du robinet 1, de manière à assurer l'étanchéité au niveau du chapeau et, éventuellement, l'éventage du circuit.

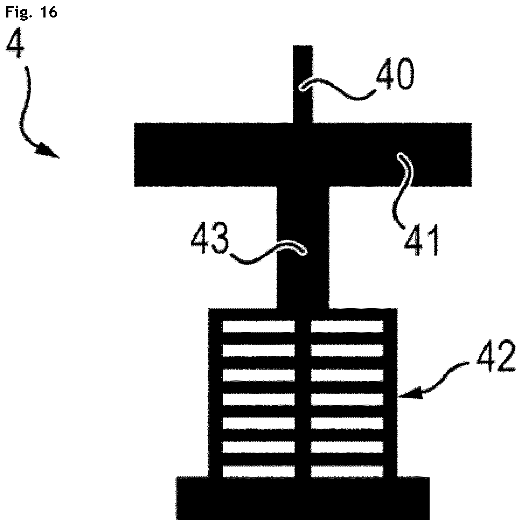

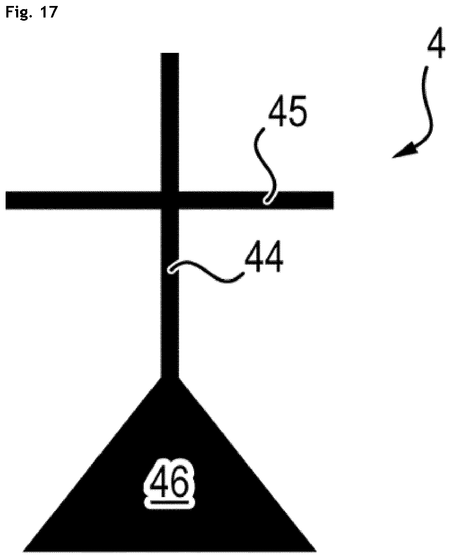

Ainsi, l'ensemble de l'invention comporte une telle "fausse tige" dont deux variantes de réalisation sont représentées schématiquement aux figures 16 et 17.

Cette fausse tige est préférentiellement adaptée à toutes les technologies de robinets à sièges parallèles et s'adapte ainsi aux dimensions des différents chapeaux et à la plage de pressions d'épreuves. On prévoit une fonction d'éventage qui peut éventuellement être bloquée pour des besoins de type maintenance ne nécessitant pas cette fonctionnalité. Une instrumentation de type mesure de pression, de température ou autre, est également envisageable via cette fausse tige.

Dans la forme de réalisation présentée à la figure 16, on a affaire à une fausse tige 4 de type presse-étoupe.

Elle est composée :
- d'une tige creuse 40 formant ligne d'évent et permettant de remplir la fonction éventage de l'outillage ;
- de rondelles en acier et de joints en caoutchouc (de préférence EPDM (éthylène-propylène-diène monomère)) 42 qui sont comprimés pour permettre l'étanchéité de la fausse tige lors de l'épreuve hydraulique,
- d'un fouloir 41 et de rondelles d'appui 43 pour permettre le maintien en position des rondelles et joints précités

Dans la forme de réalisation présentée à la figure 17, on a affaire à une fausse tige 4 de type autoclave.

Cette fausse tige est composée de :
- un robinet d'éventage placé sur une tige creuse et filetée 44 ;
- une rondelle de serrage 45 ;
- un cône d'étanchéité 46, par exemple en Téflon (marque déposée) fonctionnant par effet autoclave.

Le cône est mis en place avec un serrage léger garantissant l'étanchéité lors du remplissage à pression atmosphérique, l'augmentation de la pression dans le corps du robinet permettant d'appliquer une force plus importante sur le cône et garantissant ainsi l'étanchéité à la pression d'épreuve.

Le dispositif d'obturation 2 et sa fausse tige 4 sont dimensionnés pour une plage de pression d'épreuve très large (jusqu'à 250 bar), permettant a minima de couvrir le besoin des équipements et capacités des centrales nucléaires françaises.

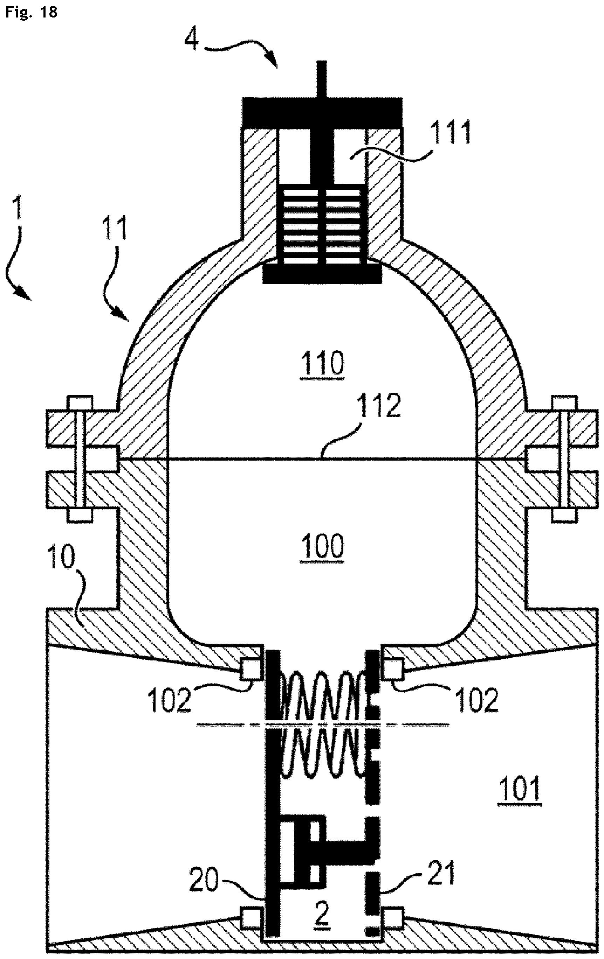

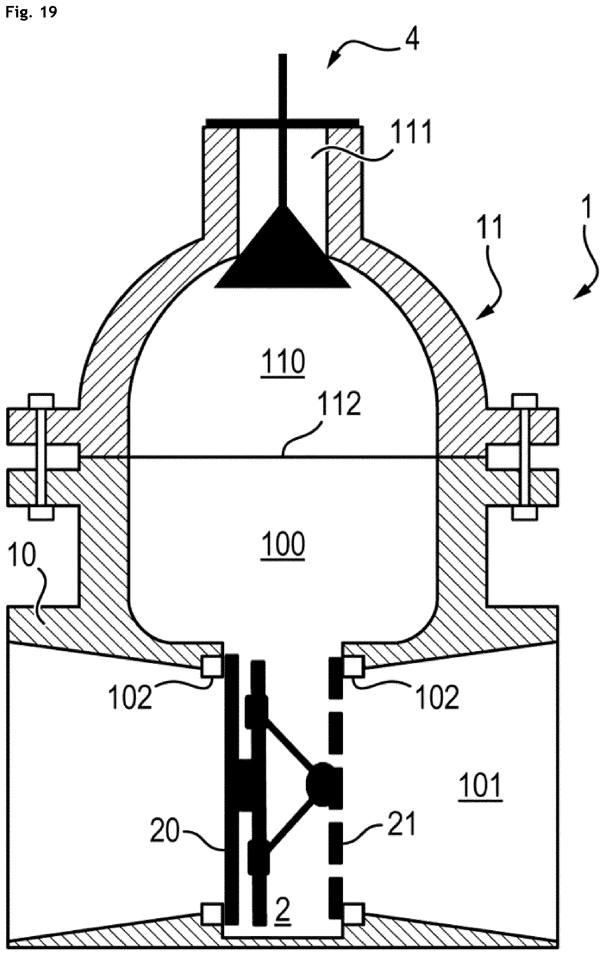

On se reportera aux figures 18 et 19 pour visualiser les emplacements de l'obturateur 2 et de la fausse tige 4 pendant l'épreuve hydraulique.

Cet ensemble a été conçu pour les épreuves hydrauliques des échangeurs et capacités de l'ilot conventionnel des centrales nucléaires. Toutefois, il peut être utilisé sur tous les robinets à sièges parallèles nécessitant d'être obturés, que ce soit pour des opérations de maintenance ou des tests, essais ou épreuves hydrauliques dans tout type d'industrie (chimie, pétrochimie, gaz, etc.).

Dans le cas particulier des épreuves hydrauliques des échangeurs et capacités des centrales nucléaires françaises, les avantages suivants sont mis en avant :
- La mise en place de l'outillage est simple, elle ne nécessite pas de compétences particulières autres que les compétences de base demandées dans le cadre des épreuves hydrauliques. Elle ne nécessite pas non plus de suivre une formation spécifique, un guide d'exploitation étant fourni pour l'intervention ;
- Un intervenant peut mettre en place l'outillage seul en toute sécurité, ce qui permet d'optimiser les ressources mobilisées sur l'activité. Pour les robinets de grandes dimensions, le dispositif d'insertion permet la mise en place de l'outillage avec les mêmes avantages quelle que soit la configuration du robinet (vertical ou incliné) ;
- La fausse tige permet de chasser l'air emprisonné dans la canalisation ce qui garantit la stabilité de la pression dans la bulle ;
- L'utilisation de cet outillage amène des gains économiques par rapport aux solutions actuellement mises en oeuvre que sont la visite interne des robinets ou la mise en place de dispositifs d'obturation soudés.
- L'utilisation de cet outillage permet également de réduire le planning de l'activité par rapport à la réalisation de travaux de soudage, la remise en conformité des équipements étant plus rapide.
- Son utilisation ne nécessite aucune source d'énergie, de tous types, pendant les tests de tenue à la pression ; rendant son exploitation autonome.

## Revendications

1. Ensemble pour la réalisation d'une épreuve hydraulique, c'est à dire d'un test de tenue à la pression, d'une installation hydraulique comprenant au moins un robinet (1) à siège parallèles (102), le corps de ce robinet ayant été préalablement débarrassé de sa tige d'actionnement, de ses opercules parallèles et du chapeau (11) de support de ladite tige d'actionnement, libérant ainsi une ouverture d'accès (11) auxdits sièges parallèles (102), **caractérisé par le fait qu'**il comprend :
un obturateur (2) à plaques parallèles (20, 21), l'une étant ajourée (21) et l'autre (20) étant pleine, ces plaques (20, 21) étant reliées par des moyens de liaison (22-26) permettant de régler leur écartement mutuel, de façon à pouvoir les faire passer d'une première position dite "rétractée" dans laquelle cet écartement est suffisant pour permettre l'introduction de l'obturateur (2) à l'intérieur dudit robinet (1) via ladite ouverture (111), à une deuxième position, dite expansée, dans laquelle ledit écartement est supérieur à celui des plaques (20, 21) dans ladite première position, cet écartement permettant de les appliquer fermement contre lesdits sièges parallèles (102) ;
un dispositif (3) d'insertion et de support dudit obturateur (2) à l'intérieur dudit robinet (1) qui comprend au moins un outil dit "outil intérieur" (31) qui a la forme générale d'un "U" et est configuré pour être introduit à l'intérieur dudit robinet (1), les ailes parallèles (310) de cet outil (31) en "U" formant des guides pour l'introduction et le retrait dudit obturateur, tandis que sa base (311) forme un support de retenue dudit obturateur (2) en vue de l'application de ses plaques parallèles (20, 21) contre lesdits sièges parallèles (102) ;
une "fausse tige" (4), c'est à dire un équipement d'étanchéité configuré pour fermer de manière étanche ledit robinet (1) après remise en place dudit chapeau de support (11).

2. Ensemble selon la revendication 1, **caractérisé par le fait que** lesdites plaques parallèles (20, 21) sont démontables et interchangeables.

3. Ensemble selon la revendication 1 ou 2, **caractérisé par le fait que** lesdits moyens de liaison (22-26) reliant lesdites plaques (20, 21) de l'obturateur (2) comprennent d'une part au moins un ressort (22) configuré pour amener lesdites plaques (20, 21) dans ladite deuxième position, et d'autre part au moins un vérin (23) pilotable à la demande, pour contraindre lesdites plaques (20, 21) à occuper ladite première position à l'encontre de l'action dudit ressort (22).

4. Ensemble selon la revendication 1 ou 2, **caractérisé par le fait que** lesdits moyens de liaison (22-26) reliant lesdites plaques (20, 21) de l'obturateur (2) comprennent d'une part au moins un ressort (22) configuré pour amener lesdites plaques (20, 21) dans ladite première position et d'autre part au moins un vérin pilotable à la demande, pour contraindre lesdites plaques (20, 21) à occuper ladite deuxième position à l'encontre de l'action dudit ressort (22).

5. Ensemble selon l'une des revendications 1 ou 2, **caractérisé par le fait que** lesdits moyens de liaison (22-26) reliant lesdites plaques (20, 21) de l'obturateur comprennent un ensemble de biellettes (26) articulées d'une part sur une première plaque (20) et d'autre part sur une seconde plaque (21).

6. Ensemble selon la revendication 5, **caractérisé par le fait que** chacune desdites biellettes (26) est articulée sur l'une des dites plaques (21) via une liaison à pivot glissant (25).

7. Ensemble selon l'une des revendications précédentes, **caractérisé par le fait que** ledit dispositif (3) d'insertion et de support comprend également un outil dit "outil extérieur" (30), configuré pour être positionné sur le plan de joint (112) dudit chapeau (11), autour de ladite ouverture (111) et permettre le centrage dudit "outil intérieur" (31).

8. Ensemble selon la revendication 7, **caractérisé par le fait que** ledit dispositif (3) d'insertion et de support comprend également une paire de rallonges extérieures de guidage (32), configurées pour être positionnées sur ledit "outil extérieur" (30), dans le prolongement des ailes (310) dudit "outil intérieur" (31).

9. Ensemble selon l'une des revendications précédentes, **caractérisé par le fait que** ladite "fausse tige" (4) est du type presse étoupe ou autoclave.

10. Ensemble selon l'une des revendications précédentes, **caractérisé par le fait que** ladite "fausse tige" (4) est pourvue d'une ligne d'évent.

11. Ensemble selon l'une des revendications précédentes, **caractérisé par le fait que** ladite "fausse tige" (4) est pourvue de moyens d'instrumentation.

## Patentansprüche

1. Anordnung zur Durchführung eines hydraulischen Prüftests, das heißt eines Druckhaltetests, einer hydraulischen Anlage, die mindestens einen Hahn (1) mit Parallelsitz (102) umfasst, wobei der Körper dieses Hahns zuvor von seiner Betätigungsstange, seinen parallelen Kappen und der Haltekappe (11) der Betätigungsstange befreit wurde, wodurch eine Zugangsöffnung (11) zu den Parallelsitzen (102) freigegeben wurde, **dadurch gekennzeichnet, dass** sie umfasst:
einen Verschluss (2) mit parallelen Platten (20, 21), von denen die eine durchbrochen (21) und die andere (20) voll ist, wobei diese Platten (20, 21) durch Verbindungsmittel (22-26) verbunden sind, die erlauben, ihre gegenseitige Beabstandung derart einzustellen, dass sie aus einer ersten, als "eingezogen" bezeichneten Position, in der diese Beabstandung ausreichend ist, um das Einführen des Verschlusses (2) in den Hahn (1) durch die Öffnung (111) zu gestatten, in eine zweite, als erweitert bezeichnete Position wechseln, in der die Beabstandung größer als die der Platten (20, 21) in der ersten Position ist, wobei diese Beabstandung erlaubt, sie fest an die Parallelsitze (102) anzulegen;
eine Einsetz- und Haltevorrichtung (3) des Verschlusses (2) in den Hahn (1), die mindestens ein als "Innenwerkzeug" (31) bezeichnetes Werkzeug umfasst, das eine allgemeine "U"-Form hat und ausgelegt ist, um in den Hahn (1) eingesetzt zu sein, wobei die parallelen Flügel (310) diese Werkzeugs (31) in "U"-Form Führungen für das Einsetzen und das Herausziehen des Verschlusses bilden, wohingegen ihre Basis (311) einen Zurückhalter des Verschlusses (2) zwecks Anlegen seiner parallelen Platten (20, 21) an die Parallelsitze (102) bildet;
eine "falsche Stange" (4), das heißt eine Dichtausrüstung, die ausgelegt ist, um den Hahn (1) nach erneuter Platzierung der Haltekappe (11) dicht zu verschließen.

2. Anordnung nach Anspruch 1, **dadurch gekennzeichnet, dass** die parallelen Platten (20, 21) demontierbar und gegenseitig austauschbar sind.

3. Anordnung nach Anspruch 1 oder 2, **dadurch gekennzeichnet, dass** die Verbindungsmittel (22-26), die die Platten (20, 21) des Verschlusses (2) verbinden, zum einen mindestens eine Feder (22) umfassen, die ausgelegt ist, um die Platten (20, 21) in die zweite Position zu führen, und zum anderen mindestens einen auf Anforderung steuerbaren Zylinder (23), um die Platten (20, 21) zu zwingen, die erste Position entgegen der Wirkung der Feder (22) einzunehmen.

4. Anordnung nach Anspruch 1 oder 2, **dadurch gekennzeichnet, dass** die Verbindungsmittel (22-26), die die Platten (20, 21) des Verschlusses (2) verbinden, zum einen mindestens eine Feder (22) umfassen, die ausgelegt ist, um die Platten (20, 21) in die erste Position zu führen, und zum anderen mindestens einen auf Anforderung steuerbaren Zylinder, um die Platten (20, 21) zu zwingen, die zweite Position entgegen der Wirkung der Feder (22) einzunehmen.

5. Anordnung nach einem der Ansprüche 1 oder 2, **dadurch gekennzeichnet, dass** die Verbindungsmittel (22-26), die die Platten (20, 21) des Verschlusses verbinden, eine Anordnung von Pleuelstangen (26) umfassen, die zum einen an einer ersten Platte (20) und zum anderen an einer zweiten Platte (21) angelenkt sind.

6. Anordnung nach Anspruch 5, **dadurch gekennzeichnet, dass** jede der Pleuelstangen (26) an einer der Platten (21) über eine gleitende Drehzapfenverbindung (25) angelenkt ist.

7. Anordnung nach einem der vorangehenden Ansprüche, **dadurch gekennzeichnet, dass** die Einsetz- und Haltevorrichtung (3) ebenfalls ein als "Außenwerkzeug" (30) bezeichnetes Werkzeug umfasst, das ausgelegt ist, um auf der Verbindungsebene (112) der Kappe (11) um die Öffnung (111) positioniert zu sein und die Zentrierung des "Innenwerkzeugs" (31) zu erlauben.

8. Anordnung nach Anspruch 7, **dadurch gekennzeichnet, dass** die Einsetz- und Haltevorrichtung (3) ebenfalls ein Paar äußerer Führungsverlängerungen (32) umfasst, die ausgelegt sind, um auf dem "Außenwerkzeug" (30) in der Verlängerung der Flügel (310) des "Innenwerkzeugs" (31) angelegt zu sein.

9. Anordnung nach einem der vorangehenden Ansprüche, **dadurch gekennzeichnet, dass** die "falsche Stange" (4) vom Typ Stopfbuchse oder Autoklav ist.

10. Anordnung nach einem der vorangehenden Ansprüche, **dadurch gekennzeichnet, dass** die "falsche Stange" (4) mit einer Entlüftungsleitung versehen ist.

11. Anordnung nach einem der vorangehenden Ansprüche, **dadurch gekennzeichnet, dass** die "falsche Stange" (4) mit Instrumentierungsmitteln versehen ist.

## Claims

1. Assembly for conducting a hydraulic proof test, that is to say a pressure resistance test, of a hydraulic installation comprising at least a valve (1) with parallel seats (102), the body of this valve having been stripped beforehand of its actuating stem, its parallel gates and the bonnet (11) supporting said actuating stem, thus freeing an opening (11) for accessing said parallel seats (102), **characterised by** the fact that it comprises:
a shut off member (2) with parallel plates (20, 21), one being apertured (21) and the other (20) being solid, these plates (20, 21) being connected by connecting means (22-26) making it possible to regulate their mutual separation, so as to be able to make them go from a first so-called "retracted" position in which this separation is sufficient to enable the introduction of the shut off member (2) into said valve (1) via said opening (111), to a second so-called expanded position, in which said separation is greater than that of the plates (20, 21) in said first position, this separation making it possible to apply them firmly against said parallel seats (102) ;
a device (3) for inserting and supporting said shut off member (2) inside said valve (1) which comprises at least a tool designated "inner tool" (31) which has a general "U" shape and is configured to be introduced into said valve (1), the parallel arms (310) of this "U" shaped tool (31) forming guides for the introduction and the removal of said shut-off member, while its base (311) forms a support for retaining said shut-off member (2) with a view to the application of its parallel plates (20, 21) against said parallel seats (102);
a "dummy stem" (4), that is to say a sealing equipment configured to close in a leak tight manner said valve (1) after putting said support bonnet (11) back in place.

2. Assembly according to claim 1, **characterised by** the fact that said parallel plates (20, 21) are dismantlable and interchangeable.

3. Assembly according to claim 1 or 2, **characterised by** the fact that said connecting means (22-26) connecting said plates (20, 21) of the shut-off member (2) comprise on the one hand at least a spring (22) configured to bring said plates (20, 21) into said second position, and on the other hand at least a jack (23) controllable on demand, to force said plates (20, 21) to occupy said first position against the action of said spring (22).

4. Assembly according to claim 1 or 2, **characterised by** the fact that said connecting means (22-26) connecting said plates (20, 21) of the shut-off member (2) comprise on the one hand at least a spring (22) configured to bring said plates (20, 21) into said first position and on the other hand at least a jack controllable on demand, to force said plates (20, 21) to occupy said second position against the action of said spring (22).

5. Assembly according to one of claims 1 or 2, **characterised by** the fact that said connecting means (22-26) connecting said plates (20, 21) of the shut-off member comprise a set of connecting rods (26) hinged on the one hand on a first plate (20) and on the other hand on a second plate (21).

6. Assembly according to claim 5, **characterised by** the fact that each of said connecting rods (26) is hinged on one of said plates (21) via a sliding pivot link (25).

7. Assembly according to one of the preceding claims, **characterised by** the fact that said insertion and support device (3) also comprises a tool designated "external tool" (30), configured to be positioned on the seal plane (112) of said bonnet (11), around said opening (111) and to enable the centring of said "inner tool" (31) .

8. Assembly according to claim 7, **characterised by** the fact that said insertion and support device (3) also comprises a pair of external guiding extensions (32), configured to be positioned on said "external tool" (30), in the continuation of the arms (310) of said "inner tool" (31).

9. Assembly according to one of the preceding claims, **characterised by** the fact that said "dummy stem" (4) is of the gland or autoclave type.

10. Assembly according to one of the preceding claims, **characterised by** the fact that said "dummy stem" (4) is provided with a vent line.

11. Assembly according to one of the preceding claims, **characterised by** the fact that said "dummy stem" (4) is provided with instrumentation means.
